# EUROPEAN PATENT APPLICATION

(11) **EP 2 042 769 A2**
(43) Date of publication of application: **01.04.2009**
(21) Application number: 08253166.6
(22) Date of filing: 29.09.2008
(51) Int. Cl.: F16F 9/348, F16F 9/516

(54) **Fluid damper**

(30) Priority: 30.09.2007 CN 200720057957 U
(71) Applicant: Shunde Taiming Metal Products Fty,Ltd., Leliu Town, Shunde Bourough Foshan City Guangdong (CN); Shunde Taiming Metal Plastic Power Products Fty, Ltd., Leliu Town, Shunde Borough Foshan City Guangdong (CN); Taiming Enterprise Holding Co.,Ltd., Kowloon, HongKong (HK)
(72) Inventor: Ng, Tai Wai, Foshan City, Guangdong Province (CN)
(74) Representative: Martin, David John

(57) **Abstract**

A fluid damper, in particular for damping the movement of parts of furniture such as a drawer or a door, includes a cylinder (2) and a piston (5) linearly displaceable within the cylinder (2). The piston (5) has a plate stopper (3) at a first end and is engaged with a piston rod (8) at a second end. The plate stopper (3) and the piston (5) are connected with a connecting rod (5.1). The fluid damper further includes a washer (4) between the piston (5) and the plate stopper (4). The washer has at least a pin (4.1) extending towards the plate stopper (3) in the area of said plate stopper (3). The piston (5) has at least a positioning projection (5.2) on the circumference thereof peripherally.

## Description

### CROSS-REFERENCE TO RELATED APPLICATIONS

This application claims priority to Chinese Utility Model Registration No. 200720057957.5, filed on 30 September 2007, entitled "Fluid Damper for Furniture", which is incorporated herein by reference for all purposes.

### FIELD OF THE INVENTION

The present invention relates to a fluid damper, and more particularly, but not by way of limitation, to a fluid damper for furniture.

### BACKGROUND OF THE INVENTION

According to the known state of the art, generally, the structures of a majority of fluid dampers used for moving furniture parts are similar. That is, a cylinder of a fluid damper is fixed on a side board or a bottom board of the furniture. The moving furniture part will hit a piston rod which is connected with a piston within the cylinder when the moving furniture part is displacing. The damping effect results from the flow resistance of the damping fluid provided in the cylinder, when the piston is displacing forwards and backwards in the cylinder.

U.S. Patent No. 6,802,408 disclosed a fluid damper, in particular for moving furniture parts, which includes a cylinder and a piston linearly displaceable within the cylinder. The piston has six openings for a damping fluid, and the fluid damper further includes four movable ring disks in the area of the openings. The at least one ring disk is arranged such that it at least partially covers the opening in the piston during the damping stroke of the piston.

According to the fluid damper of U.S. patent 6,802,408, a first ring disk has no opening, the second ring disk has one opening, the third ring disk has two openings, and the fourth ring disk has three openings. The piston itself has six openings. In addition, the four ring disks have different thickness and rigidities. The structure of the fluid damper of U.S. Patent No. 6,802,408 is complicated, which will result in a complex manufacture process and unavoidably high costs.

### SUMMARY OF THE INVENTION

In a fluid damper for slowing down movable furniture parts according to the present invention, comprising a cylinder and a piston linearly displaceable within the cylinder so as two chambers are formed on the two sides of the piston. A damping fluid is sealed within the cylinder by means of bungs at both distal ends of the cylinder. The piston is connected with a piston rod which sealingly extends through an aperture in a head bung of the cylinder. The distal end of the piston rod outside the cylinder is configured into a hook shape or a ring shape.

The piston is also connected with a plate stopper by means of a connecting rod between the piston and the plate stopper. A washer is moveably located about the connecting rod through an opening at the center of the washer. The piston has at least one positioning projection engaged with the cylinder on a circumference of the piston. It is found that by providing a fluid damper having only one washer and not having holes on the piston, the manufacture costs may be reduced significantly. In the meantime, the duration of usage may be enhanced and the simplicity of assembling may be achieved.

The washer, having an opening at the center thereof, is moveably located about the connecting rod through the opening. The external circumference of the washer is slidingly positioned within the cylinder and the external diameter of the washer is slightly smaller than that of the cylinder. So a small interstice is formed between the washer and the sidewall of the cylinder.

There is a flow passage formed between the central opening or the aperture of the washer and the connecting rod, because the opening or the aperture is slightly larger than the connecting rod. When the piston is pulled outwards under an external force, the damping fluid can pass through both the opening at the center of the washer and the interstice between the washer and the sidewall of the cylinder.

In the embodiment above, the external diameter of the washer is slightly less then that of the cylinder so that there is a small interstice formed between the washer and sidewall the cylinder. At the same time, the internal diameter of the washer, i.e. the diameter of an opening at the center thereof, is slightly greater than that of the connecting rod so that there is flow passage formed between the washer and the connecting rod.

In addition, the washer includes at least one pin extending towards the plate stopper fixed at an end of the connecting rod. The pin will keep a distance between the washer and the plate stopper when the washer is approaching towards the plate stopper. Therefore, the washer will not directly contact with the plate stopper, and the flow passage between the washer and the connecting rod will not be covered and blocked by the plate stopper. Preferably, there are 2-3 pins mounted on the washer and axially extend towards the plate stopper.

Alternatively, the pin can be mounted on the plate stopper and extends towards the washer. Preferably, there are 2-3 pins mounted on the plate stopper and axially extend towards the washer.

The piston has 3-4 positioning projections on the external circumference thereof peripherally. So 3-4 grooves are formed between every two positioning projections next to each other. The damping fluid will pass the piston through the grooves when the piston is displaced within the cylinder. In the meantime, these positioning projections will maintain the axial displacement of the piston within the cylinder. There is a screw hole at one side of the piston and a piston rod is fixedly connected with the piston by screwing the piston rod into the screw hole. The piston has a connecting rod extending from another side of the piston. The connecting rod passes the washer through the aperture thereof and is connected with the plate stopper. Therefore the washer is displaceable between the piston and the plate stopper.

In order to facilitate the installation of the fluid damper according to the invention onto a furniture, the distal end of the piston rod outside the cylinder is configured into a hook shape or a ring shape.

In order to ensure the airtightness of the fluid damper, the fluid damper according to the invention further includes a head bung and an end bung at each end of the cylinder. The piston rod extends outside the cylinder through the head bung and is sealed by means of grease sealing.

In order to further reduce the manufacture costs and enhance the duration of usage of the fluid damper according to the invention, the piston and the connecting rod are integrated by means of injection molding.

As compared with the fluid dampers of the prior art, the present invention is of simple structure, low manufacture costs and long duration of usage. The present invention further has the following advantages,
1. the way of passage of the damping fluid through the ring disk is different. In contrast with the fluid dampers according to the prior art having a plurality of holes on the ring disk, the present invention only has one opening at the center of the ring disk. Therefore, the damping fluid provided in the cylinder passes through a flow passage between the ring disk and the connecting rod.
2. according to the present invention, the piston rod is pulled outward by the piston rod having a hook or a ring at a distal end thereof, as compared with the fluid dampers of the prior art which generally having a spring within the cylinder.
3. in a conventional fluid damper, the piston generally also has a plurality ofholes through which the damping fluid passes. Advantageously, this present invention does not have any hole in the piston.
4. In addition, the piston and the connecting rod can be integrated together by means of injection molding.

These and other features and advantages will be more clearly understood from the following detailed description taken in conjunction with the accompanying drawings and claims.

### BRIEF DESCRIPTION OF THE DRAWINGS

For a more complete understanding of the present invention, reference is now made to the following brief description, wherein like reference numerals represent like parts.
**FIG. 1** is a schematic diagram of a cross-section of the fluid damper according to an embodiment of the invention.
**FIG. 2** is a schematic diagram of a cross-section of a washer used in an embodiment of the invention.
**FIG. 3** is a side view of the washer in **FIG. 2****.**
**FIG. 4** illustrates a perceptive diagram of the washer in **FIG. 2****.**
**FIG. 5** is a front view of the piston having a connecting rod used in an embodiment of the invention.
**FIG. 6** is a side view of the piston in **FIG. 5****.**
**FIG. 7** illustrated a perceptive diagram of the piston in **FIG. 5****.**
**FIG. 8** is a schematic diagram of working condition of the fluid damper according to an embodiment of the invention when the piston is pulled outward by an external force **(F1).**
**FIG. 9** is a schematic diagram of working condition of the fluid damper according to an embodiment of the invention when the piston is pushed inwards by an external force **(F2).**

### DETAILED DESCRIPTION OF THE PREFERRED EMBODIMENTS

It should be understood at the outset that although an exemplary implementation of embodiments of the present invention is illustrated below, the present system may be implemented using any number of techniques, whether currently known or in existence in the field. The present invention should in no way be limited to the exemplary implementations, drawings, and embodiments illustrated below, including the exemplary design and implementation illustrated and described herein.

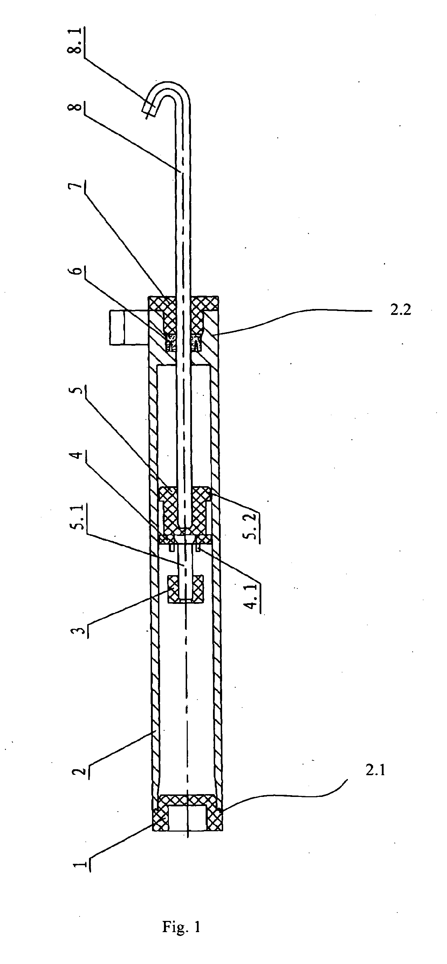

**FIG.1** shows a fluid damper for furniture according to an embodiment of the invention, which includes a cylinder **2** having a cylinder chamber within which a piston **5** is displaceable. The piston **5** divides the cylinder **2** into two chambers, i.e. the left chamber and right chamber relative to the piston **5.** The fluid damper also includes a piston rod **8** which is connected with the piston **5** by means of screw and nut. There is a screw hole **5.3** at the center of a bottom surface thereof. The piston rod **8** is fixedly connected with the piston by screwing the piston rod **8** into the screw hole **5.3.** The piston rod **8** axially extends through a head bung **7** of the cylinder **2.** The piston rod **8** extends outside the cylinder **2** through an aperture at the center of the head bung **7,** and is configured into a hook shape or a ring shape at a distal end. The piston **5** includes a connecting rod **5.1** which axially extends towards a tail end **2.1** of the cylinder **2.** There is a washer **4** moveably located on the connecting rod **5.1** through an opening **4.2** at the center of the washer **4.** The connecting rod **5.1** is further connected with a plate stopper **3** at a distal end of the connecting rod **5.1.**

The cylinder **2** is in liner configuration. The head bung **7** and an end bung **1** define a chamber within the cylinder **2** for airtightness. A hydraulic fluid, for example oil or water is used as a damping fluid within said chamber. The damping fluid is poured into the cylinder **2** from the tail end **2.1** of the cylinder **2.** Then the end bung **1** is screwedly or weldedly sealed at the tail end **2.1** of the cylinder **2.**

The piston rod **8** is axially extending outside the cylinder **2** through a head end **2.2** of the cylinder **2** and an aperture in the head bung **7.** The piston rod **8** is sealed at the aperture of the head bung **7** by means of grease sealing so as to ensure the airtightness of the cylinder chamber. It should be understood that other alternative sealing means could be used for sealing the piston rod **8** and the aperture of the head hung **7.** The distal end of the piston rod **8** outside the cylinder **2** is configured into a hook shape or a ring shape for facilitating the installation of this fluid damper onto the furniture.

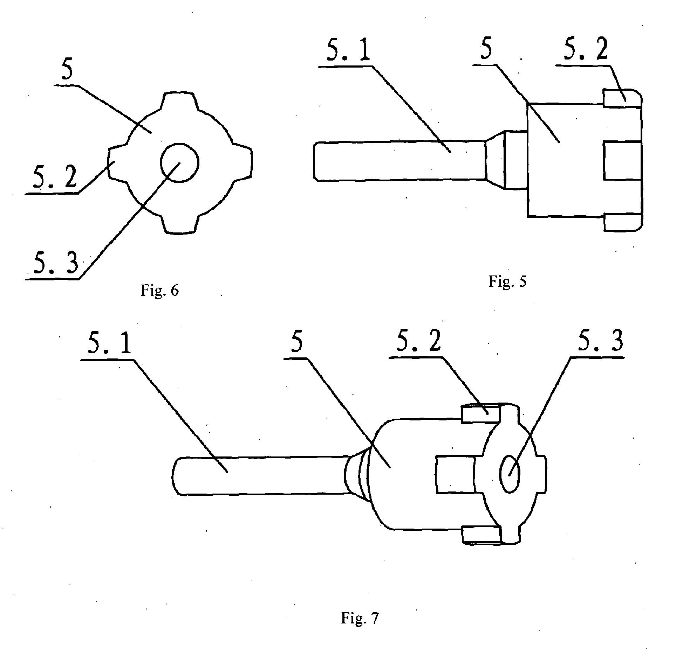

In the embodiment, the diameter of the piston **5** is slightly less than that of the cylinder **2.** Meanwhile, the piston **5** has four positioning projections **5.2** on a circumference of the piston **5** peripherally. The four positioning projections **5.2** contact with the sidewall of the cylinder **2.** Therefore, the piston can be positioned within the cylinder **2** for linearly displacing. **FIGS 5** to **7** show one embodiment of the piston **5** having the connecting rod **5.1** used in the fluid damper.

In said preferred embodiment above, the piston **5** and the connecting rod **5.1** are integrated together by means of injection molding. Such structure can make the whole structure simple and reduce the costs in a significant manner.

As shown in **FIG. 7****,** a groove is formed between every two positioning projections **5.2** next to each other. The damping fluid provided within the cylinder **2** can pass the piston **5** through the groove when the piston **5** is displaced within the cylinder **2.** The piston **5** also has a screw hole **5.3** at the center of the piston **5** for coupling with the piston rod **8** by means of screw and nut.

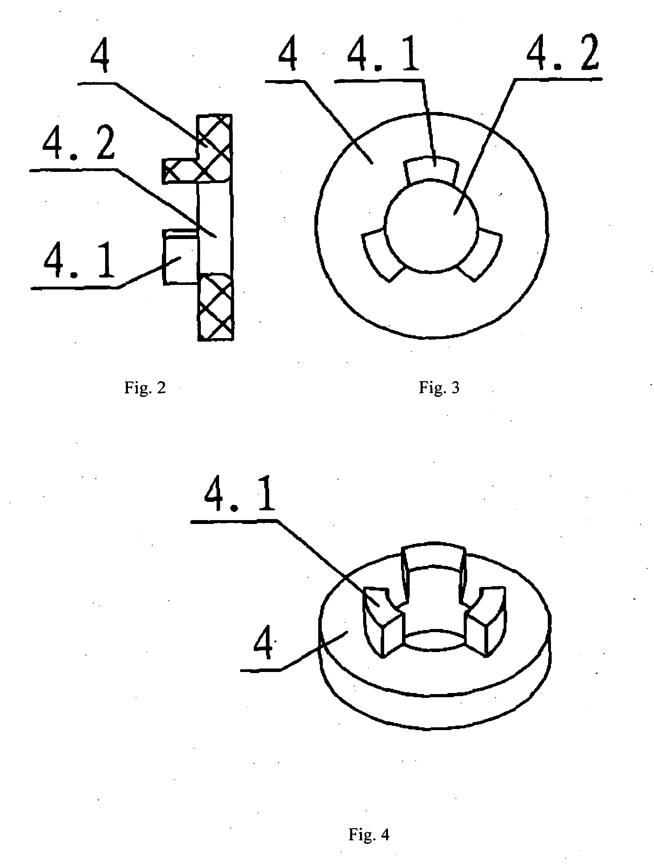

**FIGS 3** to **5** show one embodiment of the washer **4,** which has a slightly small diameter than that of the cylinder **2.** Therefore, an interstice is formed between the washer **4** and sidewall of the cylinder **2.** The damping fluid can pass through the interstice when the piston **5** is displaced within the cylinder **2.** The washer **4** is formed of stainless steel or enhanced metal material owing to strengthens and costs, though numerous other materials could be used.

Like a conventional washer, the washer **4** has an opening **4.2** at the center thereof so that a connecting rod **5.1** can pass through. In the embodiment of the washer **4,** the internal diameter of the washer **4,** i.e. the diameter of the opening 42, is slightly greater than that of the connecting rod **5.1.** Therefore, a flow passage is formed between the internal edge of the washer **4** and the connecting rod **5.1** so that the damping fluid can pass through the flow passage.

In the embodiment of the washer **4** as shown **in** **FIGS 1** **and** **3** to **4,** the washer **4** further includes three pins **4.1** extending towards the plate stopper **3** in the area of the plate stopper **3.** The pins **4.1** will keep a distance between the washer **4** and the plate stopper **3** when the washer **4** is moved between the piston 5 and the plate stopper **3** along the connecting rod **5.1.** So the washer **4** will not directly contact with the plate stopper **3** at any events, that the flow passage between the washer **4** and the connecting rod **5.1** will not be covered and blocked by the plate stopper **3.**

In another embodiment of the fluid damper which is not illustrated with accompanying drawings, the pin **4.1** can be mounted on the plate stopper **3.** That is, the pin **4.1** on the plate stopper **3** extends towards the washer **4** to prevent flow passage between the washer **4** and the connecting rod **5** from being blocked by the plate stopper **3.**

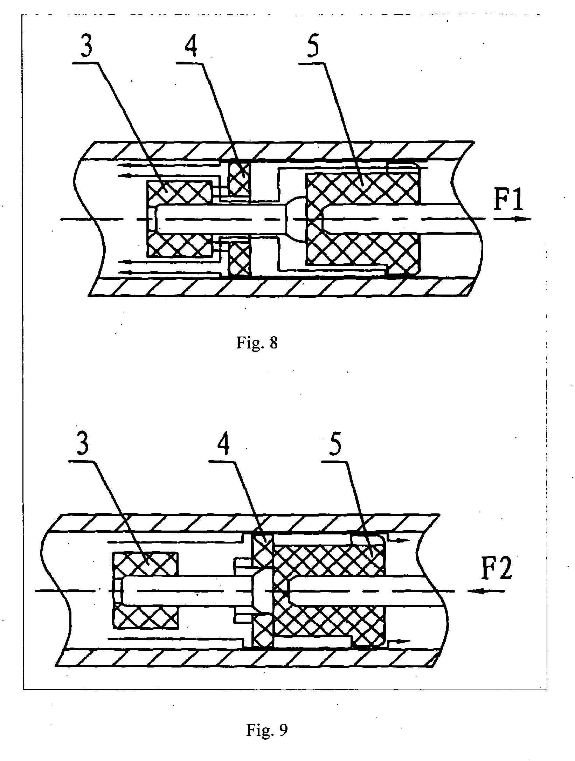

**FIG. 8** shows the working condition and principle of this fluid damper when the piston **5** is pulled outwards by an external force **(F1).** When the piston rod **8** is pulled outwards by the external force **(F1),** the piston **5,** the connecting rod **5.1** and the plate stopper **3** will be displaced along with the direction of the external force **(F1).** The damping fluid within the right chamber relative to the piston **5** is compressed and expelled to the left chamber relative to the piston **5.** The expelled damping fluid will pass through the groove on the piston **5,** and push the washer **4** to move along with the connecting rod **5.1** towards the plate stopper **3,** until the pin **4.1** encounters the plate stopper **3** at the distal end of the connecting rod **5.1.** The damping fluid within the right chamber relative to the piston **5** will pass through firstly the groove on the piston **5,** and then the opening **4.2** at the center of the washer **4** into the left chamber relative to the piston **5.** Another passage for the damping fluid is firstly from the groove on the piston **5,** and then the interstice between the washer **4** and the sidewall of the cylinder **2.** So the piston **5** can be displaced quickly within the cylinder **2** because the damping fluid can pass through the opening **4.2** at the center of the washer **4** and the interstice between the washer **4** and the cylinder **2** at the same time.

**FIG. 9** shows the working condition and principle of this fluid damper when the piston **5** is pushed inwards by an external force **(F2).** When the piston rod **8** is pushed inwards by the external force **(F2),** the piston **5,** the connecting rod **5.1** and the plate stopper **3** will be displaced along with the direction of the external force **(F2).** The damping fluid within the left chamber relative to the piston **5** is compressed and expelled to the right chamber relative to the piston **5.** The washer **4** will contact with the piston **5** and the flow passage between the washer **4** and the connecting rod **5.1** will be covered by the piston **5** soon after the piston **5** is displaced under the external force **(F2).** Then the washer **4** will cover the passage of damping fluid on the piston **5,** i.e. the groove on the circumference of the piston **5.** At the same time, the opening **4.2** at the center of the washer **4** is completely covered by the piston **5.** As a result, the interstice between the washer **4** and the sidewall of the cylinder **2** is the only way through which the damping fluid can pass from the left chamber to the right chamber. Therefore, the piston **5** has to be displaced slowly within the cylinder **2** because the throughflow quantity of the damping fluid is limited.

It is understood that the various preferred version of the invention are shown and described above to illustrate different features of the invention and the ways in which these features may be obtained. However, this invention is not intended to be limited to the aforesaid embodiment, but rather is intended to be limited only by the claims below. Thus, this invention encompasses all different versions that fall literally or equivalently within the scope of the claims.

## Claims

1. A fluid damper for furniture, comprises a cylinder **(2)** and a piston **(5)** linearly displaceable within the cylinder **(2),**
the piston **(5)** has a piston rod **(8)** on one side and has a plate stopper **(3)** on the other side, a connecting rod **(5.1)** is connected between the piston **(5)** and the plate stopper **(3),**
a washer **(4)** is movably located about the connecting rod **(5.1),**
wherein
the piston **(5)** has at least one positioning projection **(5.2)** engaged with the cylinder **(2)** on a circumference of the piston **(5)** peripherally.

2. The fluid damper for furniture according to claim **1,** wherein an external circumference of the washer **(4)** is slidingly positioned within the cylinder **(2),**
a flow passage is formed between an aperture **(4.2)** of the washer **(4)** and the connecting rod **(5.1).**

3. The fluid damper for furniture according to claim **1,** wherein the washer **(4)** has at least one pin **(4.1)** near an aperture **(4.2)** axially extending towards the plate stopper **(3).**

4. The fluid damper for furniture according to claim **1,** wherein an external circumference of the washer **(4)** is slidingly positioned within the cylinder **(2),**
a flow passage is formed between an aperture **(4.2)** of the washer **(4)** and the connecting rod **(5.1),**
the plate stopper **(3)** has at least one pin **(4.1)** axially extending towards the washer **(4).**

5. The fluid damper for furniture according to claim **1,** wherein the piston **(5)** has 3-4 positioning projections **(5.2)** on a circumference of the piston **(5)** peripherally,
the piston has a hole **(5.3)** at the center of bottom surface thereof,
the piston **(5)** is fixedly connected with the piston rod **(8)** via the hole **(5.3),**
the piston **(5)** has a connecting rod **(5.1)** extending from the center of a top surface of the piston **(5),**
the connecting rod **(5.1)** passes through an aperture **(4.2)** of the washer **(4)** and is fixedly connected with the plate stopper **(3),**
the washer **(4)** is displaceable between the piston **(5)** and the plate stopper **(3).**

6. The fluid damper for furniture according to claim **4,** wherein the piston rod **(8)** is configured into a hook **(8.1)** shape at a distal end thereof outside the cylinder **(2).**

7. The fluid damper for furniture according to claim **1,** wherein the fluid damper further includes a head bung **(7)** at a first distal end **(2.2)** of the cylinder **(2),** and an end bung **(1)** at a second distal end **(2.1)** of the cylinder **(2),**
the piston rod **(8)** extends outside the cylinder **(2)** through the head bung **(7),**
the piston rod **(8)** is sealed with the head bung **(7)** by means of grease sealing.

8. The fluid damper for furniture according to claim **1,** wherein the piston **(5)** and the connecting rod **(5.1)** are integrated together by means of injection molding.
